# EUROPEAN PATENT SPECIFICATION

(11) **EP 4 377 787 B1**
(45) Date of publication and mention of the grant of the patent: **16.04.2025**
(21) Application number: 22772440.8
(22) Date of filing: 26.08.2022
(51) Int. Cl.: G06F 8/76, G06F 11/36, G06F 8/75, G06F 8/74, G06F 8/36, G05B 17/00

(54) **METHOD AND SYSTEM FOR GENERATING ENGINEERING PROGRAMS WHICH ARE COMPATIBLE WITH A SPECIFIC ENGINEERING ENVIRONMENT**
VERFAHREN UND SYSTEM ZUR ERZEUGUNG VON ENGINEERING-PROGRAMMEN, DIE MIT EINER SPEZIFISCHEN ENGINEERING-UMGEBUNG KOMPATIBEL SIND
PROCÉDÉ ET SYSTÈME DE GÉNÉRATION DE PROGRAMMES D'INGÉNIERIE QUI SONT COMPATIBLES AVEC UN ENVIRONNEMENT D'INGÉNIERIE SPÉCIFIQUE

(30) Priority: 27.08.2021 EP 21193585
(43) Date of publication of application: 05.06.2024
(73) Proprietor: Siemens Aktiengesellschaft, 80333 München (DE)
(72) Inventor: ANTONY, Elvis, Bangalore, Karnataka 560102 (IN); ORUGANTI, Srivathsa Simha, Bangalore, Karnataka 560100 (IN)
(74) Representative: Isarpatent
(86) International application number: PCT/EP2022/073838
(87) International publication number: WO 2023/025954

(56) References cited:
- EP-A1- 3 835 943
- CN-A- 104 881 285
- AN YAMENG ET AL: "OntoPLC: Semantic Model of PLC Programs for Code Exchange and Software Reuse", IEEE TRANSACTIONS ON INDUSTRIAL INFORMATICS, IEEE SERVICE CENTER, NEW YORK, NY, US, vol. 17, no. 3, 25 May 2020 (2020-05-25), pages 1702 - 1711, XP011824992, ISSN: 1551-3203, [retrieved on 20201203], DOI: 10.1109/TII.2020.2997360

## Description

The present invention relates to a field of engineering of computer assisted programming, and more particularly relates to a method and system for generating engineering programs which are compatible with a specific engineering environment.

Typically, an engineering project comprises a plurality of engineering programs. The engineering project is configured to control operation of a plurality of devices in a technical installation. Examples of the plurality of devices include but is not limited to, programmable logic controllers, computers, motor drivers, control units, microcontrollers, human machine interfaces, edge servers, and industrial control systems. Each of the plurality of engineering programs are configured to control operation of one or more devices of the plurality of devices in the technical installation. For efficient control of the plurality of devices, the plurality of engineering programs may have to be coded based on specific conventions and constraints that are aligned with one or more requirements of the plurality of devices of the technical installation.

Thus, the plurality of engineering programs of the engineering project may be designed to be compatible with a first en-gineering environment associated with the technical installation. The first engineering environment comprises information about conventions and constraints associated with coding languages, coding conventions, hardware configuration, software configurations, processing speed restrictions and memory restrictions which must be adhered to, by the plurality of en-gineering programs in the engineering project. In a case where a program of the plurality of engineering program does not adhere to the constraints dictated by the first engineering environment, then the engineering project becomes incompatible with the first engineering environment.

In a case where the engineering project is not compatible with the first engineering environment, the engineering project may not function in the technical installation associated with the first engineering environment. Thus, prior to deploying the engineering project on the technical installation, a code developer may have to manually modify the engineering project, to make it compatible with constraints of the first engineering environment.

Typically, the code developer manually modifies the engineering project to make the engineering project compatible with the first engineering environment. In order to modify the en-gineering project, the code developer may have to modify several thousand lines of code in the plurality of engineering programs in the engineering project. Thus, it becomes very difficult and time consuming to deploy the engineering project in the first engineering environment.

Further, to determine an erroneous code that is causing the engineering project to be incompatible with the first engineering environment, the code developer may have to analyze a huge portion of the engineering project, line by line. Such an endeavour may consume a huge amount of time for the code developer. Conventional engineering systems fail to automatically determine the erroneous code that is causing the engineering project to be incompatible with the second engineering environment. Hence, there are no mechanisms to automate engineering involved in generating engineering projects. Currently, the engineering projects comprise a huge number of engineering programs, each of which are enormous in code length. Each of the plurality of engineering programs may have data and control flow interrelationships with other en-gineering programs of the plurality of engineering programs. Any modification of any program of the plurality of engineering progam may result in a disruption in the data flow and the control flow interrelationships between the plurality of engineering programs of the engineering project. Further, the plurality of engineering programs may not be readable and understandable. To make the plurality of engineering programs readable, the code developer may have to manually enter comments, and also annotations, and also modularize the plurality of engineering programs. It is almost humanly impossible to go through millions of codes present in the plurality of engineering programs to modularize the plurality of engineering programs.

Further, the engineering project may have a huge number of programming elements such as variables, classes, and functions which may be defined the engineering project. In existing systems, the code developer may have to study a gigantic number of such definitions and references of the plurality of programming elements and also the control and data flow interrelationships between the plurality of engineering programs, before modifying any one of the plurality of engineering programs. It is difficult for the code developer to manually go through the huge number of engineering programs and the huge number of programming elements, as well as identify the interrelationships between the plurality of programming elements and the plurality of engineering programs in the en-gineering project. Furthermore, it is very difficult for the code developer to migrate the engineering program from the first engineering environment to a second engineering environment for the aforementioned reasons.

OntoPLC: Semantic Model of PLC Programs for Code Exchange and Software Reuse", Yamen An ET AL, IEEE 2020, relates to a presentation of PLC development improving program efficiency and encouraging code exchange and software reuse when designing smart manufacturing and industrial automation elements.

CN104881285 relates to a code snippet marking and reusing system based on body.

EP 3 835 943 A1 relates to a method and system for generating engineering diagrams in an engineering system.

In light of above, there exists a need for an efficient method and system for generating engineering projects which are compatible with a specific engineering environment.

Therefore, it is an object of the present invention to provide a method and system for generating engineering projects which are compatible with specific engineering environment.

The object of the invention is achieved by a method according to claim 1 of generating engineering projects compatible with a specific engineering environment.

In a preferred embodiment, the plurality of devices function together in the technical installation to achieve one or more objectives of the technical installation. Each of the plurality of devices comprises a processor and a memory. The memory is configured to store one or more engineering programs of the plurality of engineering programs. The processor of the plurality of devices is configured to execute the one or more engineering programs to achieve one or more key performance indicators associated with the one or more engineering programs. Examples of the one or more key performance indicators includes a processing speed, a memory requirement, and a process efficiency of the one or more engineering programs, when the one or more engineering programs are executed by the processor of the one or more engineering objects. The one or more engineering programs may be compatible with one engineering environment and incompatible with other engineering environments. In other words, the plurality of constraints associated with the first engineering environment may be mutually exclusive with the plurality of constraints associated with the second engineering environment. Thus the received request comprises an instruction to convert the first engineering project which is compatible to engineering program to the second engineering project which is compatible with the second engineering environment. In one example, the first en-gineering environment is a single-user engineering environment and the second engineering environment is a multi-user engineering environment.

In the preferred embodiment, the plurality of devices in the technical installation may be connected to each other via one or more physical connections. The one or more physical connections may comprise a physical link (such as wirings or cables). Further, functioning of the plurality of devices may be defined based on a plurality of parameter values. The plurality of parameter values comprises motor configuration parameters, network and communication parameter, valve controls, temperature or pressure values of a sensor, speed, torque and the like.

In the preferred embodiment, the method further comprises determining, by the processing unit, a plurality of code statements from a plurality of engineering projects based on an analysis of the plurality of engineering projects. The plurality of engineering projects is stored in a central database. The plurality of engineering projects comprises engineering projects which are designed for controlling a plurality of technical installations. Each of the plurality of technical installations operates in a specific engineering environment of the plurality of engineering environments. Each of the plurality of engineering projects are compatible with a specific engineering environment of the plurality of engineering environments. Each of the plurality of engineering environments comprise information that dictate a plurality of constraints associated with coding languages, coding conventions, hardware configuration, software configurations, processing speed restrictions and memory restrictions which must be adhered to, by the plurality of engineering programs in the specific engineering project of the plurality of engineering projects. The plurality of code statements comprises assignment statements, program element definition statements, and operation statements. The processing unit is configured to determine the plurality of code statements by application of a natural language processing algorithm on the plurality of engineering programs of the plurality of engineering projects.

In the preferred embodiment, the method further comprises determining, by the processing unit, a dataflow and a control flow between each of the determined plurality of code statements, based on an analysis of the plurality of code statements. The data flow indicates a transformation of values of a plurality of data variables in the plurality of engineering programs. The control flow comprises information about a sequence in which the plurality of code statements are executed by the processing unit. For example, the control flow comprises information about statements which will be repeatedly executed by the processing unit, because of the presence of looped and recursive statements in the plurality of engineering programs.

In the preferred embodiment, the method further comprises determining, by the processing unit, a plurality of logical blocks from the plurality of engineering projects by grouping the plurality of statements into the plurality of logical blocks. The plurality of code statements are grouped based on analysis of the determined data flow and the determined control flow between each of the determined plurality of statements. In other words, the method further comprises determining, by the processing unit, the plurality of logical blocks from the plurality of engineering projects. Advantageously, the plurality of engineering projects are automatically split into meaningful and logical blocks based on the data flow and the control flow between the plurality of code statements in the plurality of engineering projects. Thus, the plurality of engineering projects are thereby modularized into the plurality of logical blocks. Advantageously, a readability and a maintainability of the plurality of engineering project is improved. Advantageously, an amount of manual labour and time involved in modularizing the plurality of engineering projects is reduced.

In the preferred embodiment, the method further comprises generating, by the processing unit, a knowledge graph for each of the determined plurality of logical blocks. The knowledge graph generated for a specific logical block comprises information about the data flow and the control flow between a set of statements within the specific logical block. The method further comprises generating, by the processing unit, the ontology schema for the plurality of engineering projects by merging a plurality of knowledge graphs generated for the plurality of logical blocks. The ontology schema comprises information about relationships between the determined plurality of logical blocks, and information about data flow and control flow between each of the plurality of logical blocks of the plurality of en-gineering projects. In one example, the ontology schema comprises information about a correspondence between a logical block of a first engineering project of the plurality of engineering projects, and a logical block of a second engineering project of the plurality of engineering project. The ontology schema further comprises information about functions performed by each of the plurality of logical blocks in the plurality of engineering projects. The ontology schema further comprises information about compatibility of each of the plurality of logical blocks with each of the plurality of engineering environments. The ontology schema further comprises information associated with interrelationships between the plurality of logical blocks, the plurality of engineering environments, and one or more key performance indicators of the plurality of engineering programs of the plurality of engineering projects. Advantageously, interrelationships and dependencies between the plurality of logical blocks in the plurality of engineering programs are integrated into the ontology schema.

In a preferred embodiment, the method further comprises determining, by the processing unit, from the plurality of logical blocks, a set of logical blocks which are compatible with the second engineering environment based on an analysis of the generated ontology schema and the first engineering project. The method further comprises generating, by the processing unit, the second engineering project which is compatible with the second engineering environment, by merging of the determined set of logical blocks based on the generated ontology schema. Advantageously, the first engineering project, which is compatible with the first engineering environment, is automatically converted into the second engineering project which is compatible with the second engineering environment. Advantageously, the manual labour and time involved in making the first engineering project compatible with the second engineering environment is reduced. Advantageously, migration of the first engineering project from a first technical installation which operates in the first engineering environment, to a second technical installation which operates in the second engineering environment, is simplified.

In a preferred embodiment, the method further comprises receiving, by the processing unit, a request to integrate a code snippet into the generated second engineering project. The method further comprises generating, by the processing unit, an ontological representation for the code snippet, based on an analysis of the code snippet. The method further comprises determining, by the processing unit, a portion of the generated ontology schema, which is similar to the generated ontological representation of the code snippet. The method further comprises modifying, by the processing unit, the second engineering project by integration of the code snippet into the second engineering project based on an analysis of the determined portion of the ontology schema. Advantageously, the code snippet is integrated into the second en-gineering project such that the integrated code snippet is compatible with the second engineering environment.

In yet another preferred embodiment, the method further comprises analyzing, by the processing unit the generated ontology schema and the second engineering project to determine one or more errors in a first logical block of the determined set of logical blocks. In one example, the one or more errors corresponds to one or more portions of the first logical block that is causing incompatibility of the first logical block with the second engineering environment. The method further comprises modifying, by the processing unit, the first logical block of the set of logical blocks, to eradicate the determined one or more errors in the first logical block of the set of logical blocks. In one example, the one or more portions of the first logical block are deleted or modified to make the first logical block compatible with the second engineering environment. The method is further configured to predict an occurrence of a variation the one or more key performance indicators associated with the second engineering project based on the analysis of the ontology schema. The variation is predicted to occur as a result of the modification of the first logical block. The method further comprises modifying, by the processing unit, one or more programming blocks of the set of logical blocks, based on the analysis of the ontology schema, to prevent the occurrence of the variation in the one or more key performance indicators associated with the second engineering project. Advantageously, any variation in the one or more key performance indicators, caused as a result of conversion of the first engineering project to the second engineering project, is eradicated.

In yet another preferred embodiment, the method further comprises generating, by the processing unit, a simulation instance for a third engineering environment. The method further comprises simulating, by the processing unit, execution of the generated second engineering project in the third en-gineering environment by executing the second engineering project on the generated simulation instance.

In yet another preferred embodiment, the method further comprises determining, by the processing unit, whether the generated second engineering project is compatible with a third engineering environment, based on a result of the simulated execution of the generated second engineering project. The method is further comprises deploying, by the processing unit, the generated second engineering project in real-time onto the third engineering environment, based on a determination that the generated second engineering project is compatible with the third engineering environment. The method is further comprises displaying, by the processing unit, the generated second engineering project on a display device. Advantageously, the second engineering project is tested for compatibility with the second engineering environment.

In yet another preferred embodiment, the method comprises notifying, by the processing unit, about an incompatibility of the generated second engineering project, based on a determination that the generated second engineering project is incompatible. The method further comprises generating, by the processing unit, a plurality of error log files associated with the generated second engineering project, based on the determination that the generated engineering program is incompatible. The method further comprises displaying, by the processing unit, the generated plurality of error log files on a display device. Advantageously, a user is enabled to analyze the plurality of error log files and remedy the incompatibility of the generated second engineering project, with the second engineering environment.

In yet another preferred embodiment, the method comprises analyzing, by the processing unit, the second engineering project and the ontology schema associated with the plurality of engineering projects. The method further comprises mapping, by the processing unit, one or more logical blocks of the second engineering project, with one or more logical blocks of the plurality of logical blocks, based on the analysis. The method further comprises generating, by the processing unit, a plurality of program modules from the second engineering project, based on the mapping, wherein each of the plurality of program modules corresponds to a specific subroutine in the second engineering project.

In yet another preferred embodiment, the method comprises determining, by the processing unit, two or more logical blocks in the set of logical blocks, which correspond to different portions of a common subroutine. The method further comprises generating, by the processing unit, a combined logical block by merging the determined two or more logical blocks of the set of logical blocks.

In yet another preferred embodiment, the method further comprises mapping, by the processing unit, the set of logical blocks to a plurality of subroutines in the second engineering project. The method further comprises grouping, by the processing unit, into a plurality of groups based on the mapping of the set of logical blocks to the plurality of subroutines, wherein each group of the plurality of groups contains one or more logical blocks, of the set of logical blocks, which are mapped to a specific subroutine of the plurality of subroutines.

The object of the present invention is also achieved by an engineering system according to claim 11 for generating engineering projects compatible with a specific engineering environment.

The object of the present invention is also achieved by an industrial environment according to claim 12.

The object of the present invention is also achieved by a computer-program product according to claim 13.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of generating engineering projects compatible with a specific engineering environment, according to an embodiment of the present invention;
- FIG 2: is a block diagram of an engineering system, such as those shown in FIG. 1, in which an embodiment of the present invention can be implemented;
- FIG 3: is a block diagram of an automation module, such as those shown in FIG 2, in which an embodiment of the present invention can be implemented;
- FIG 4A-F: is a process flowchart illustrating an exemplary method of generating engineering projects in an en-gineering system, according to an embodiment of the present invention;
- FIG 5 is: a schematic representation of modularization of a group of engineering projects, according to an embodiment of the present invention;
- FIG 6: is a schematic representation of an exemplary ontology schema, according to an embodiment of the present invention; and
- FIG 7: is a schematic representation of conversion of an first engineering project to a second engineering project, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

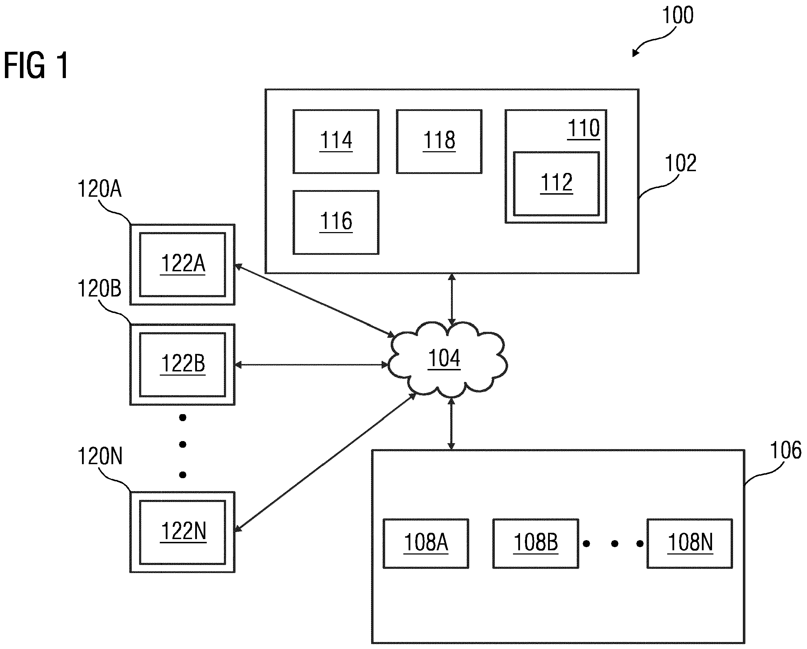

FIG 1 is a block diagram of an industrial environment 100 capable of generating engineering projects which are compatible with a specific engineering environment, according to an embodiment of the present invention. In FIG 1, the industrial environment 100 includes an engineering system 102, a technical installation 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to the technical installation 106 via the network 104 (such as Local Area Network (LAN), Wide Area Network (WAN), Wi-Fi, Internet, any short range or wide range communication). The engineering system 102 is also connected to the one or more client devices 120A-N via the network 104.

The engineering system 102 is connected to one or more engineering objects 108A-N. The one or more engineering objects 108A-N are devices in the technical installation 106 connected to each other via the network 104. The one or more engineering objects 108A-N may include servers, robots, switches, automation devices, programmable logic controllers (PLC)s, human machine interfaces (HMIs), motors, valves, pumps, actuators, sensors and other industrial equipment(s). The one or more engineering objects 108A-N may be connected to each other or several other components (not shown in FIG 1) via physical connections. The physical connections may be through wiring between the one or more engineering objects 108A-N. Alternatively, the one or more engineering objects 108A-N may also be connected via non-physical connections (such as Internet of Things (IOT)) and 5G networks. Although, FIG 1 illustrates the engineering system 102 connected to one technical installation 106, one skilled in the art can envision that the engineering system 102 can be connected to several technical installations 106 located at different geographical locations via the network 104.

The client devices 120A-N may be a desktop computer, laptop computer, tablet, smart phone and the like. Each of the client devices 120A-N is provided with an engineering tool 122AN for generating and/or editing a plurality of engineering projects respectively. The plurality of engineering projects comprises engineering projects which are designed for controlling the technical installation 106. The technical installation 106 operates in a specific engineering environment of the plurality of engineering environments. Each of the plurality of engineering projects are compatible with a specific engineering environment of the plurality of engineering environments. Each of the plurality of engineering environments comprise information that dictate a plurality of constraints associated with coding languages, coding conventions, hardware configuration, software configurations, processing speed restrictions and memory restrictions which must be adhered to, by the plurality of engineering programs in the specific engineering project of the plurality of engineering projects.

The client devices 120A-N can access the engineering system 102 for automatically generating engineering projects. The client devices 120A-N can access cloud applications (such as providing performance visualization of the one or more engineering objects 108A-N via a web browser). Throughout the specification, the terms "client device" and "user device" are used interchangeably.

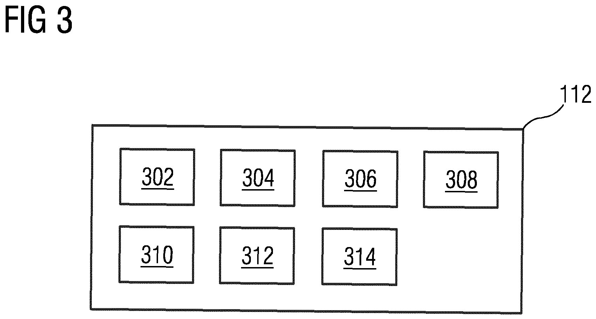

The engineering system 102 may be a standalone server deployed at a control station or may be a remote server on a cloud computing platform. In a preferred embodiment, the en-gineering system 102 may be a cloud-based engineering system. The engineering system 102 is capable of delivering applications (such as cloud applications) for managing a technical installation 106 comprising the one or more engineering objects 108A-N. The engineering system 102 may comprise a platform 110(such as a cloud computing platform), an automation module 112, a server 114 including hardware resources and an operating system (OS), a network interface 116 and a database 118. The network interface 116 enables communication between the engineering system 102, the technical installation 106, and the client device(s) 120A-N. The interface (such as cloud interface) (not shown in FIG 1) may allow the engineers at the one or more client device(s) 120A-N to access engineering project files stored at the engineering system 102 and perform one or more actions on the engineering project files as same instance. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. In an exemplary embodiment, the platform 110 may correspond to an Integrated Development Environment (IDE) comprising program editors and compilers which allow the users of the client devices 120A-N to generate engineering programs. The platform 110 may further comprise an automation module 112 configured for generating engineering programs. Details of the automation module 112 is explained in FIG. 3.

The database 118 stores the information relating to the technical installation 106 and the client device(s) 120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the automation module 112. The database 118 is configured to store engineering project files, engineering programs, object behavior model, parameter values associated with the one or more engineering objects 108A-N, test results, simulation results, status messages, one or more simulation instances, graphical programs, program logics, program logic patterns, engineering objects 108A-N and engineering object properties, one or more engineering object blocks, relationship information between the engineering objects, requirements, program update messages and the like.

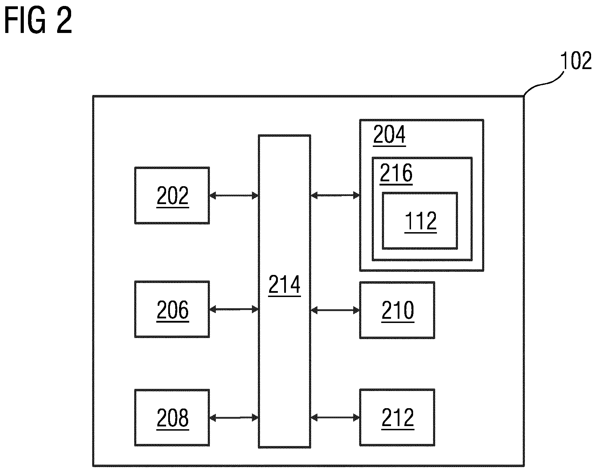

FIG 2 is a block diagram of an engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes an automation module 112 stored in the form of machine-readable instructions on any of the above-mentioned storage media and may be in communication with and executed by the processing unit 202.

When executed by the processing unit 202, the automation module 112 causes the processing unit 202 to generate engineering projects which are compatible with a specific engineering environment in the engineering system 102. In an embodiment, the automation module 112 causes the processing unit 202 to receive a request to convert a first engineering project which is compatible with a first engineering environment, to a second engineering project which is compatible with a second engineering environment. The first engineering project and the second engineering project comprises the plurality of engineering programs designed to control operation of a plurality of devices, such as the one or more engineering objects 108A-N in the technical installation 106. The first en-gineering environment and the second engineering environment comprises information associated with a plurality of constraints associated with coding languages, coding conventions, hardware configuration, software configurations, processing speed restrictions and memory restrictions which must be adhered by the plurality of engineering programs in the engineering project. The plurality of constraints enable the plurality of engineering programs to efficiently operate the plurality of devices of the technical installation.

The automation module 112 further causes the processing unit 202 to determine a plurality of code statements from a plurality of engineering projects based on an analysis of the plurality of engineering projects. The automation module 112 further causes the processing unit 202 to determine a plurality of code statements in the plurlaity of engineering projects, by application of a natural language processing algorithm on the plurality of engineering programs of the plurality of engineering projects.

The automation module 112 further causes the processing unit 202 to determine, a dataflow and a control flow between each of the determined plurality of code statements, based on an analysis of the plurality of code statements. The data flow indicates a transformation of values of a plurality of data variables in the plurality of engineering programs. The control flow comprises information about a sequence in which the plurality of code statements are executed by the processing unit. For example, the control flow comprises information about statements which will be repeatedly executed by the processing unit 202, because of the presence of looped and recursive statements in the plurality of engineering programs.

The automation module 112 further causes the processing unit 202 to determine a plurality of logical blocks from the plurality of engineering projects by grouping the plurality of statements into the plurality of logical blocks. The plurality of code statements are grouped based on analysis of the determined data flow and the determined control flow between each of the determined plurality of statements. The automation module 112 causes the processing unit 202 to determine the plurality of logical blocks from the plurality of engineering projects. Advantageously, the plurality of engineering projects are automatically split into meaningful and logical blocks based on the data flow and the control flow between the plurality of code statements in the plurality of engineering projects. Thus, the plurality of engineering projects are thereby modularized into the plurality of logical blocks. Advantageously, a readability and a maintainability of the plurality of engineering project is improved. Advantageously, an amount of manual labour and time involved in modularizing the plurality of engineering projects is reduced.

The automation module 112 further causes the processing unit 202 to generate a knowledge graph for each of the determined plurality of logical blocks. The knowledge graph generated for a specific logical block comprises information about the data flow and the control flow between a set of statements within the specific logical block. The automation module 112 further causes the processing unit 202 to generate the ontology schema for the plurality of engineering projects by merging a plurality of knowledge graphs generated for the plurality of logical blocks. The ontology schema comprises information about relationships between the determined plurality of logical blocks, and information about data flow and control flow between each of the plurality of logical blocks of the plurality of en-gineering projects. In one example, the ontology schema comprises information about a correspondence between a logical block of a first engineering project of the plurality of engineering projects, and a logical block of a second engineering project of the plurality of engineering project. The ontology schema further comprises information about functions performed by each of the plurality of logical blocks in the plurality of engineering projects. The ontology schema further comprises information about compatibility of each of the plurality of logical blocks with each of the plurality of engineering environments. The ontology schema further comprises information associated with interrelationships between the plurality of logical blocks, the plurality of en-gineering environments, and one or more key performance indicators of the plurality of engineering programs of the plurality of engineering projects. Advantageously, interrelationships and dependencies between the plurality of logical blocks in the plurality of engineering programs are integrated into the ontology schema.

The storage unit 206 may be a non-transitory storage medium configured for storing a database (such as database 118) which comprises server version of the plurality of programming blocks associated with the set of industrial domains. The communication interface 208 is configured for establishing communication sessions between the one or more client devices 120A-N and the engineering system 102. The communication interface 208 allows the one or more engineering applications running on the client devices 120A-N to import/export engineering project files into the engineering system 102. In an embodiment, the communication interface 208 interacts with the interface at the one or more client devices 120A-N for allowing the engineers to access the engineering programs associated with an engineering project file and perform one or more actions on the engineering programs stored in the engineering system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210. The network interface 212 may be configured to handle network connectivity, bandwidth and network traffic between the engineering system 102, client devices 120A-N and the technical installation 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of an automation module 112, such as those shown in FIG 2, in which an embodiment of the present invention can be implemented. In FIG 3, the automation module 112 comprises a request handler module 302, an object behavior model generation module 304, an analysis module 306, a modifier module 308,an engineering project database 310, a validation module 312 and a deployment module 314. FIG. 3 is explained in conjunction with FIG. 1 and FIG. 2.

The request handler module 302 is configured for receiving the request to convert the first engineering project to the second engineering project of the technical installation 106. For example, the request is received from one of the one or more users external to the industrial environment 100 via a network. In alternative embodiment, the request is received from the one or the one or more client devices 120A-N via the network.

The object behavior model generation module 304 is configured for generating the ontology schema of the plurlaity of engineering projects. In a preferred embodiment, the generated ontology schema comprises information about relationships between the set of variables corresponding to each logical block of the plurality of logical blocks of the plurlaity of engineering projects and a set of Key performance indicators associated with the set of programming blocks. The set of variables comprises a plurality of data and pointer variables defined and used in the plurality of logical blocks. The set of key performance indicators associated with the plurality of logical blocks are key performance indicators achieved by the one or more engineering objects 108A-N, when the one or more engineering objects 108A-N executes the plurality of logical blocks of the plurality of engineering projects. In one example, the ontology schema is a knowledge graph based representation comprising a plurality of layers. The plurality of layers comprises a first, a second, a third, and a fourth knowledge graph layers. The first knowledge graph layer comprises knowledge associated with compatibility between the plurality of engineering projects with each of the plurality of engineering environments. The second knowledge graph layer comprises information about a compatibility of each of the plurality of logical blocks with the plurality of engineering environments. The third knowledge graph layer comprises information about a plurlaity of data flow and a plurality of control flow paths between the plurlaity of logical blocks of the plurality of engineering projects. Further, the third knowledge graph layer comprises information about a mapping between two or more logical blocks of the plurality of logical blocks, based on a functionality of the plurality of logical blocks. For example, if a first logical block and a second logical block of the plurality of logical blocks perform a same functionality, then third knowledge graph layer comprises information which indicates that the first logical block is mapped to the second logical block. The fourth knowledge graph layer comprises information associated with the plurality of data flow paths and control flow paths between the plurality of code statements in the plurality of engineering projects.

The fourth knowledge graph layer further comprises information which indicates an object behavior model associated with a relationship between the plurality of logical blocks and the one or more engineering objects 108A-N in the technical installation 106. Further, the ontology schema comprises one or more rules associated with one or more relationships between the one or more engineering objects 108A-N and the plurality of logical blocks.

Further, the object behavior model generation module 304 is configured for determining one or more engineering object properties associated with each of the classified one or more engineering objects 108A-N. The object properties are object's domain context, association and relationship with other engineering objects, object size, object identifier, type of engineering object, and the like. Such object properties are determined for each of the one or more engineering objects. Such determination using ontology enables engineering object elicitation & generalization, defines property & relationship between the engineering objects.

When once the object properties are determined, the object behavior model generation module 304 is configured for determining relationship between each of the one or more classified engineering objects 108A-N and the plurality of logical blocks based on the determined relationships between each of the one or more classified engineering objects 108A-N. The object behavior model generation module 304 is further configured for generating the object behavior model of the one or more engineering objects 108A-N.

In an embodiment, the object behavior model generation module 304 is also configured for managing the plurality of logical blocks corresponding to each of the one or more engineering objects 108A-N, physical connections between the one or more engineering objects 108A-N, and a plurality of parameter values associated with the one or more engineering objects 108AN and the physical connections. Each of the plurality of logical blocks comprises a set of programmable instructions or code statements corresponding to a program logic of each of the plurality of engineering projects. Each logical block of the plurality of logical blocks may correspond to a function block under an engineering design. The engineering design may comprise several such function blocks. The users at the client devices 120A-N uses the engineering tool 122A-N in order to design or develop the plurality of engineering projects.

The analysis module 306 is configured for analyzing the ontology schema associated with the plurality of engineering projects. Specifically, the analysis module 306 is configured for retrieving data and control parameters associated with each logical block of the plurality of logical blocks. The data and control parameters are key performance indicators comprising information relating to the set of programming blocks associated with the industrial domain of the technical installation 106, for example, sensor data, actuator data, environment data, network data, any automation data and the like. Further, the analysis module 306 is configured for comparing the retrieved data and control parameters associated with the set of programming blocks with data and control parameters stored in the object behavior model. Furthermore, the analysis module 306 is configured for identifying deviation between the retrieved data and control parameters associated with the set of programming blocks and the data and control parameters stored in the object behavior model. The deviation indicates a difference between the retrieved data and control parameters, and the data and control parameters stored in the object behavior model. Also, the analysis module 306 is configured for determining type of behavior of the one or more engineering objects 108A-N corresponding to the identified deviation. The type of behavior comprises normal, abnormal, steady, and require maintenance and the like. Furthermore, the analysis module 306 is configured for analyzing the behavior of the one or more engineering objects 108A-N based on the determined type of behavior. In one example, the analysis module 306 is configured to analyze the plurality of programming blocks by application of a natural language processing algorithm on a source code of the plurality of programming blocks.

The modifier module 308 is configured for modifying the plurality of logical blocks based on the outcome of analysis of the ontology schema. The plurality of logical blocks is modified based on the analysis of the ontology schema. The modifications comprise any changes such as addition, deletion, update, replacement or revision of one or more variables, code lines, classes, functions, or comments in the plurality of logical blocks. In one example, an outcome of analysis of the ontology schema may be a behavior report indicating whether behavior or characteristic of each logical block of the plurality of logical blocks as defined in the ontology schema is acceptable, improvised, enhanced, optimized or the like. Thus, the plurality of logical blocks are modified based on the relationships between the set of variables corresponding to each logical block in the plurality of logical blocks, the set of Key performance indicators associated with the plurality of logical blocks, and an industrial domain of the technical installation 106. Thus, the plurality of engineering projects is generated based on the relationships between the set of variables corresponding to each logical block in the plurality of logical blocks, the set of Key performance indicators associated with the plurality of logical blocks, and the industrial domain of the technical installation 106. In other words, the plurality of logical blocks are customized based on the ontology schema, to generate a set of engineering projects which are compatible with one or more engineering environments of the plurality of engineering environments.

The engineering project database 310 is configured for storing an engineering project library comprising the plurality of engineering projects, the plurality of logical blocks, and the generated ontology schema. The engineering project database 310 is furtehr configured to store information about the one or more engineering objects 108A-N, such as physical connections between the one or more engineering objects 108A-N, and a plurality of parameter values associated with the one or more engineering objects 108A-N and the physical connections. The engineering project database 310 is configured for continuously updating the engineering project library with updated versions of the engineering projects. Also, the engineering project database 310 is configured for maintaining the engineering project library in the generated ontology schema.

The validation module 312 is configured to generate a simulation instance for the second engineering environment. In one example, the simulation instance is a digital twin of the one or more engineering objects 108A-N which are functioning based on the second engineering environment. The validation module 312 is configured to simulate execution of the generated second engineering project in the second engineering environment in a simulation environment by executing the set of logical block on the generated simulation instance. The validation module 312 is configured to determine that the generated second engineering project is compatible with the second engineering environment, based on a result of the simulated execution of the generated set of logical blocks. Further, the validation module 312 is configured for simulating behavior of the set of logical blocks in the simulation environment by executing the set of logical blocks on the generated simulation instance. The simulation environment emulates an actual technical installation, such as technical installation 106. Further, the simulation environment may be a virtual setup of the actual technical installation 106. Also, the validation module 312 is configured for validating the behavior of the set of logical blocks based on results of simulation. The results of simulation may indicate success or failure of the second engineering project if deployed in the second engineering environment.

The deployment module 314 is configured for deploying the second engineering project in real-time onto the second engineering environment based on the validation. Advantageously, the generated engineering program is only deployed after the determination that the generated engineering program is compatible.

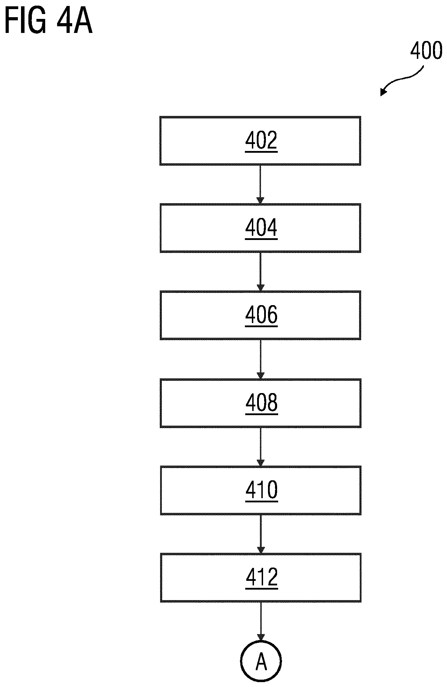

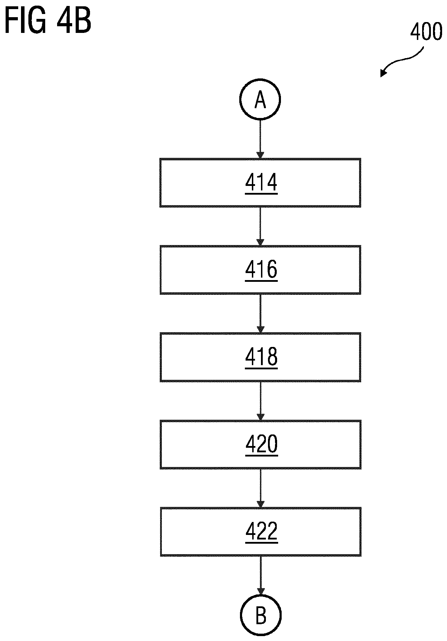

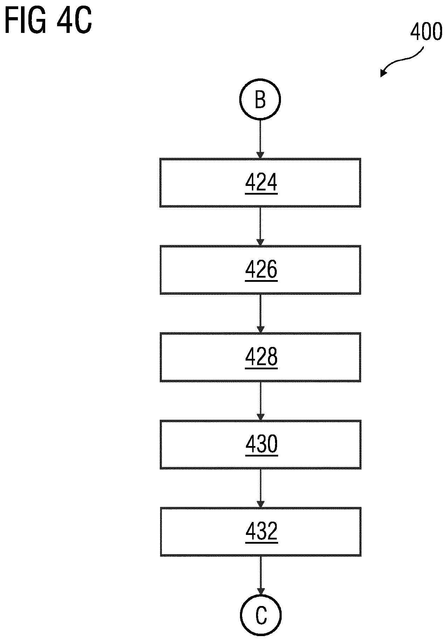

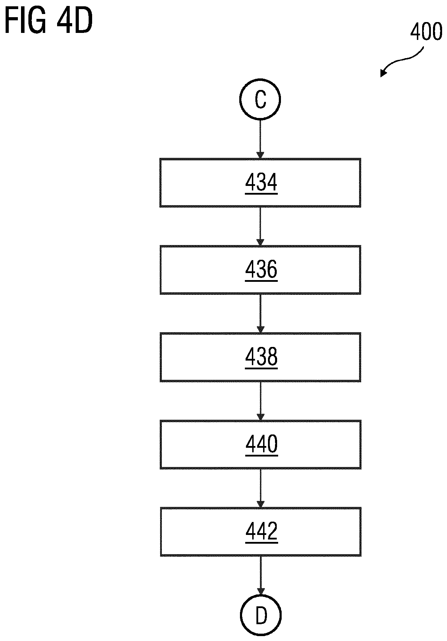

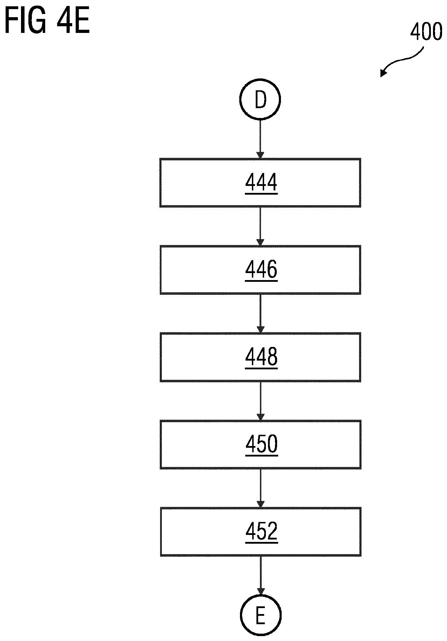

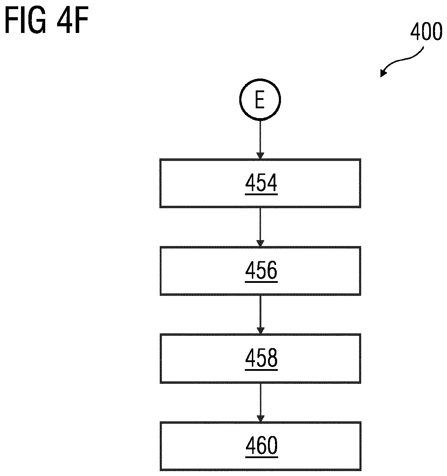

FIG 4A-F is a process flowchart illustrating an exemplary method 400 of generating engineering projects which are compatible with a specific engineering environment in an engineering system 102, according to an embodiment of the present invention.

At step 402, a request to convert a first engineering project which is compatible with a first engineering environment, to a second engineering project which is compatible with a second engineering environment, is received by the processing unit 202. The first engineering project and the second engineering project comprises a plurality of engineering programs designed to control operation of a plurality of devices (such as the one or more engineering objects 108A-N) in the technical installation 106. Examples of the plurality of devices include but is not limited to, programmable logic controllers, computers, motor drivers, control units, microcontrollers, human machine interfaces, edge servers, and industrial control systems.

The first engineering environment and the second engineering environment comprises information associated with a plurality of constraints associated with coding languages, coding conventions, hardware configuration, software configurations, processing speed restrictions and memory restrictions which must be adhered by the plurality of engineering programs in the engineering project. The plurality of constraints enable the plurality of engineering programs to efficiently operate the plurality of devices of the technical installation 106. The technical installation 106 is at least one of an industrial manufacturing plant, an industrial processing plant, or an industrial power plant.

The plurality of devices function together in the technical installation 106 to achieve one or more objectives of the technical installation 106. Each of the plurality of devices comprises a processor and a memory. The memory is configured to store one or more engineering programs of the plurality of engineering programs. The processor of the plurality of devices is configured to execute the one or more engineering programs to achieve one or more key performance indicators associated with the one or more engineering programs. Examples of the one or more key performance indicators includes a processing speed, a memory requirement, and a process efficiency of the one or more engineering programs, when the one or more engineering programs are executed by the processor of the one or more engineering objects.

The one or more engineering programs may be compatible with one engineering environment and incompatible with other engineering environments. In other words, the plurality of constraints associated with the first engineering environment may be mutually exclusive with the plurality of constraints associated with the second engineering environment. Thus the received request comprises an instruction to convert the first engineering project which is compatible to engineering program to the second engineering project which is compatible with the second engineering environment. In one example, the first engineering environment is a single-user engineering environment and the second engineering environment is a multi-user engineering environment.

In the preferred embodiment, the plurality of devices in the technical installation may be connected to each other via one or more physical connections. The one or more physical connections may comprise a physical link (such as wirings or cables). Further, functioning of the plurality of devices may be defined based on a plurality of parameter values. The plurality of parameter values comprises motor configuration parameters, network and communication parameter, valve controls, temperature or pressure values of a sensor, speed, torque and the like.

At 404, a plurality of code statements are determined by the processing unit 202, from a plurality of engineering projects based on an analysis of the plurality of engineering projects. The plurality of engineering projects is stored in a central database such as the engineering project database 310. The plurality of engineering projects comprises engineering projects which are designed for controlling a plurality of technical installations. Each of the plurality of technical installations operates in a specific engineering environment of the plurality of engineering environments. Each of the plurality of engineering projects are compatible with a specific engineering environment of the plurality of engineering environments. Each of the plurality of engineering environments comprise information that dictate a plurality of constraints associated with coding languages, coding conventions, hardware configuration, software configurations, processing speed restrictions and memory restrictions which must be adhered to, by the plurality of engineering programs in the specific engineering project of the plurality of engineering projects. The plurality of code statements comprises assignment statements, program element definition statements, and operation statements. The processing unit 202 is configured to determine the plurality of code statements by application of a natural language processing algorithm on the plurality of engineering programs of the plurality of engineering projects.

At 406, a dataflow and a control flow between each of the determined plurality of code statements, is determined by the processing unit 202 based on an analysis of the plurality of code statements. The data flow indicates a transformation of values of a plurality of data variables in the plurality of engineering programs. The control flow comprises information about a sequence in which the plurality of code statements are executed by the processing unit 202. For example, the control flow comprises information about statements which will be repeatedly executed by the processing unit 202, because of the presence of looped and recursive statements in the plurality of engineering programs.

At step 408, a plurality of logical blocks is determined by the processing unit 202, from the plurality of engineering projects by grouping the plurality of statements into the plurality of logical blocks. The plurality of code statements are grouped based on analysis of the determined data flow and the determined control flow between each of the determined plurality of statements, by the processing unit 202. In other words, the plurality of logical blocks is determined by the processing unit 202 from the plurality of engineering projects. Advantageously, the plurality of engineering projects are automatically split into meaningful and logical blocks based on the data flow and the control flow between the plurality of code statements in the plurality of engineering projects. Thus, the plurality of engineering projects are thereby modularized into the plurality of logical blocks. Advantageously, a readability and a maintainability of the plurality of engineering project is improved. Advantageously, an amount of manual labour and time involved in modularizing the plurality of engineering projects is reduced.

At step 410, a knowledge graph is generated by the processing unit 202 for each of the determined plurality of logical blocks. The knowledge graph generated for a specific logical block comprises information about the data flow and the control flow between a set of statements within the specific logical block. Thus, a plurality of knowledge graphs are generated by the processing unit 202, for the plurality of logical blocks.

At step 412, the ontology schema for the plurality of engineering projects is generated by the processing unit 202 by merging the plurality of knowledge graphs generated for the plurality of logical blocks. The ontology schema comprises information about relationships between the determined plurality of logical blocks, and information about data flow and control flow between each of the plurality of logical blocks of the plurality of engineering projects. In one example, the ontology schema comprises information about a correspondence between a logical block of a first engineering project of the plurality of engineering projects, and a logical block of a second engineering project of the plurality of engineering project. The ontology schema further comprises information about functions performed by each of the plurality of logical blocks in the plurality of engineering projects. The ontology schema further comprises information about compatibility of each of the plurality of logical blocks with each of the plurality of engineering environments. The ontology schema further comprises information associated with interrelationships between the plurality of logical blocks, the plurality of en-gineering environments, and one or more key performance indicators of the plurality of engineering programs of the plurality of engineering projects. Advantageously, interrelationships and dependencies between the plurality of logical blocks in the plurality of engineering programs are integrated into the ontology schema.

At step 414, from the plurality of logical blocks, a set of logical blocks which are compatible with the second engineering environment based on an analysis of the generated ontology schema and the first engineering project, is determined by the processing unit 202.

At atep 416, the second engineering project is generated by the processing unit 202. The second engineering project is compatible with the second engineering environment. The second engineering project is generated by the processing unit 202 by merging of the determined set of logical blocks based on the generated ontology schema. Advantageously, the first engineering project, which is compatible with the first engineering environment, is automatically converted into the second engineering project which is compatible with the second engineering environment. Advantageously, the manual labour and time involved in making the first engineering project compatible with the second engineering environment is reduced. Advantageously, migration of the first engineering project from a first technical installation which operates in the first engineering environment, to a second technical installation which operates in the second engineering environment, is simplified.

At step 418, a request to integrate a code snippet into the generated second engineering project is received by the processing unit 202.

At step 420, an ontological representation for the code snippet, is generated by the processing unit 202 based on an analysis of the code snippet.

At step 422, a portion of the generated ontology schema, which is similar to the generated ontological representation of the code snippet, is determined by the processing unit 202.

At step 424, the second engineering project is modified by the processing unit 202 by integration of the code snippet into the second engineering project based on an analysis of the determined portion of the ontology schema. Advantageously, the code snippet is integrated into the second engineering project such that the integrated code snippet is compatible with the second engineering environment.

At step 426, the generated ontology schema and the second en-gineering project is analyzed by the processing unit 202 to determine one or more errors in a first logical block of the determined set of logical blocks. In one example, the one or more errors corresponds to one or more portions of the first logical block that is causing incompatibility of the first logical block with the second engineering environment.

At step 428, the first logical block of the set of logical blocks, is modified by the processing unit 202 to eradicate the determined one or more errors in the first logical block of the set of logical blocks. In one example, the one or more portions of the first logical block are deleted or modified to make the first logical block compatible with the second engineering environment.

At step 430, an occurrence of a variation the one or more key performance indicators associated with the second engineering project is predicted by the processing unit 202 based on the analysis of the ontology schema. The variation is predicted to occur as a result of the modification of the first logical block.

At step 432, one or more logical blocks of the set of logical blocks, is determined by the processing unit 202 based on the analysis of the ontology schema, to prevent the occurrence of the variation in the one or more key performance indicators associated with the second engineering project. Advantageously, any variation in the one or more key performance indicators, caused as a result of conversion of the first engineering project to the second engineering project, is eradicated.

At step 434, a simulation instance for the second engineering environment is generated by the processing unit 202. The pro-ceesing unit 202 is further configured to simulate execution of the generated second engineering project in the second en-gineering environment by executing the second engineering project on the generated simulation instance.

At step 436, it is determined, by the processing unit 202, whether the generated second engineering project is compatible with the second engineering environment, based on a result of the simulated execution of the generated second engineering project.

At step 438, the generated second engineering project is deployed by the processing unit 202 in real-time onto the second engineering environment, based on a determination that the generated second engineering project is compatible.

At step 440, the generated second engineering project is displayed by the processing unit 202 on a display device (such as the one or more client devices 120A-N). Advantageously, the second engineering project is tested for compatibility with the second engineering environment.

At step 442, an incompatibility of the generated second engineering project is notified by the processing unit 202 based on a determination that the generated second engineering project is incompatible.

At step 444, a plurality of error log files associated with the generated second engineering project is generated by the processing unit 202, based on the determination that the generated engineering program is incompatible.

At step 446, the generated plurality of error log files is displayed by the processing unit 202 on a display device. Advantageously, a user is enabled to analyze the plurality of error log files and remedy the incompatibility of the generated second engineering project, with the second engineering environment.

At step 448, the second engineering project and the ontology schema associated with the plurality of engineering projects is analyzed by the processing unit 202.

At step 450, one or more logical blocks of the second engineering project is mapped by the processing unit 202 to one or more logical blocks of the plurality of logical blocks, based on the analysis.

At step 452, a plurality of program modules is generated by the processing unit 202 from the second engineering project, based on the mapping. Each of the plurality of program modules corresponds to a specific subroutine in the second engineering project.

At step 454, two or more logical blocks is determined by the processing unit 202 from the set of logical blocks, such that the determined two or more logical blocks correspond to different portions of a common subroutine.

At step 456, a combined logical block is generated by the processing unit 202 by merging the determined two or more logical blocks of the set of logical blocks.

At step 458, the set of logical blocks is mapped by the processing unit 202 to a plurality of subroutines in the second engineering project.

At step 460, the set of logical blocks is grouped by the processing unit 202 into a plurality of groups based on the mapping of the set of logical blocks to the plurality of subroutines, wherein each group of the plurality of groups contains one or more logical blocks, of the set of logical blocks, which are mapped to a specific subroutine of the plurality of subroutines.

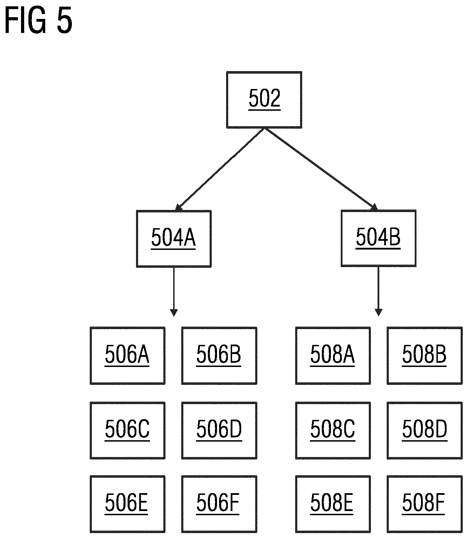

FIG 5 is a schematic representation of modularization of a group of engineering projects, according to an embodiment of the present invention. FIG 5 is described in conjunction with Fig. 1, 2, 3, and 4A-F. FIG 5 depicts the group of engineering projects 502. The group of engineering projects 502 comprises two or more engineering projects 504a and 504b. The two or more engineering projects 504a and 504b are designed for controlling two or more technical installations. Each of the two or more technical installations operates in a specific engineering environment of the plurality of engineering environments. Each of the two or more engineering projects 504a and 504b are compatible with a specific engineering environment of the plurality of engineering environments. Each of the plurality of engineering environments comprise information that dictate a plurality of constraints associated with coding languages, coding conventions, hardware configuration, software configurations, processing speed restrictions and memory restrictions which must be adhered to, by the two or more engineering projects 504a and 504b.

The processing unit 202 is configured to analyze the group of engineering projects 502 based on at least one natural language processing algorithm. The processing unit 202 is configured to extract the two or more engineering projects 504a and 504b from the group of engineering projects 502, based on the analysis.

The processing unit 202 is configured to determine a plurality of code statements from the two or more engineering projects 504a and 504b based on an analysis of the two or more engineering projects 504a and 504b. The plurality of code statements comprises assignment statements, program element definition statements, and operation statements.

The processing unit 202 is further configured to determine a dataflow and a control flow between each of the determined plurality of code statements, based on an analysis of the plurality of code statements by the processing unit 202. The data flow indicates a transformation of values of a plurality of data variables in the two or more engineering projects 504a and 504b. The control flow comprises information about a sequence in which the plurality of code statements are executed by the processing unit 202. For example, the control flow comprises information about statements which will be repeatedly executed by the processing unit 202, because of the presence of looped and recursive statements in the plurality of engineering programs.

The processing unit 202 is further determine a first set of logical blocks 506a-f and a second set of logical blocks 508a-f from the two or more engineering projects 504a and 504b. The processing unit 202 is further configured to generate the ontology schema for the group of engineering projects 502.

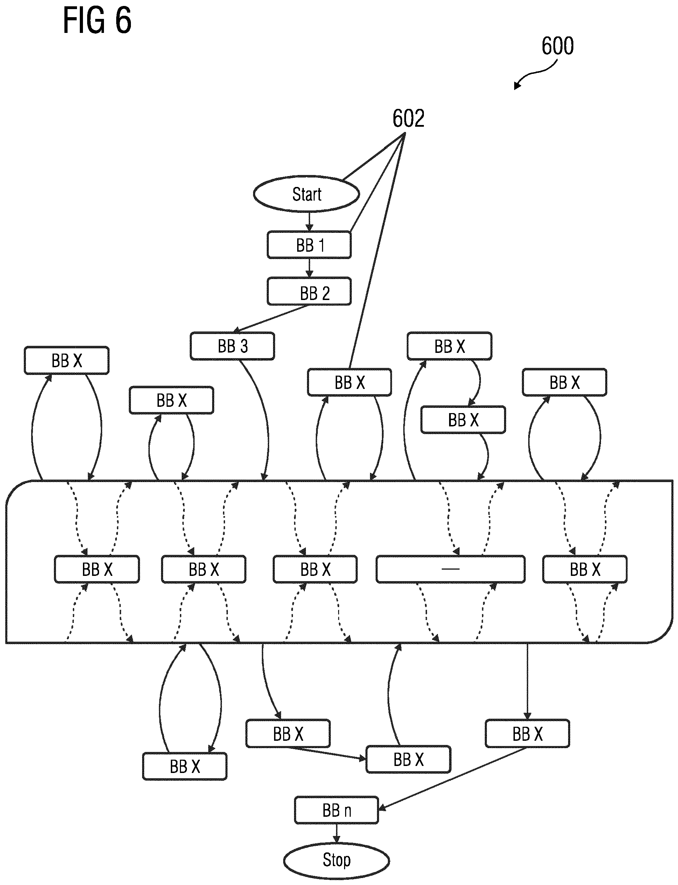

FIG 6 is a schematic representation of an exemplary ontology schema, according to an embodiment of the present invention. FIG 6 is described in conjunction with Fig. 1, 2, 3, 4A-F, and 5. FIG 6 depicts an exemplary ontology schema 600 generated by the processing unit 202. The ontology schema 600 may be a knowledge graph. The ontology schema 600 comprises a plurality of nodes 602. Each of the plurality of nodes correspond to a specific logical block of the first set of logical blocks 506a-f and the second set of logical blocks 508a-f.

The ontology schema 600 comprises information about relationships between the first set of logical blocks 506a-f and the second set of logical blocks 508a-f, and information about data flow and control flow between each of the first set of logical blocks 506a-f and the second set of logical blocks 508a-f of the group of engineering projects 502. In one example, the ontology schema 600 comprises information about a correspondence between a logical block of a first engineering project (such as 504a), and a logical block of a second engineering project (such as 504b) of the group of engineering projects 502. The ontology schema 600 further comprises information about functions performed by each of the first set of logical blocks 506a-f and the second set of logical blocks 508a-f in the group of engineering projects 502. The ontology schema 600 further comprises information about compatibility of each of the first set of logical blocks 506a-f and the second set of logical blocks 508a-f with each of the plurality of engineering environments. The ontology schema 600 further comprises information associated with interrelationships between the first set of logical blocks 506a-f and the second set of logical blocks 508a-f, the plurality of engineering environments, and one or more key performance indicators each of of the group of engineering projects 502.

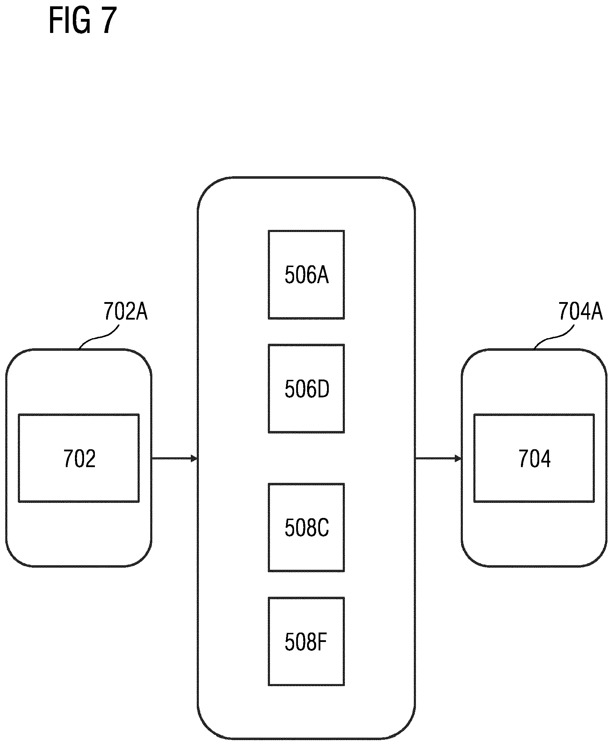

FIG 7 is a schematic representation of conversion of an first engineering project to a second engineering project, according to an embodiment of the present invention. FIG 7 is described in conjunction with Fig. 1, 2, 3, 4A-E, 5. and 7. The processing unit 202 is configured to receive a request to convert a first engineering project 702 to a second engineering project 704. The first engineering project 702 is compatible with a first engineering environment 702a and the second engineering project 704 is compatible with a second engineering environment 704a. The processing unit 202 is further configured to generate an ontological representation of the first engineerinag project 702. Further, the processing unit 202 is configured to compare the generated ontological representation of the first engineering project 702 with the ontology schema generated for the group of engineering projects 502. The processing unit 202 is further configured to determine a third set of logical blocks (506a, 506d, 508c, and 508f) from the first set of logical blocks 506a-f and the second set of logical blocks 508a-f, based on the comparison. The third set of logical blocks (506a, 506d, 508c, and 508f) are determined such that the third set of logical blocks (506a, 506d, 508c, and 508f) has identical functionality with a plurality of engineering programs in the first engineering project 702. The third set of logical blocks (506a, 506d, 508c, and 508f) are determined further based on a compatibility of the third set of logical blocks (506a, 506d, 508c, and 508f) with the second engineering environment. The processing unit 202 is further configured to generate the second engineering project 704 by merging the third set of logical blocks (506a, 506d, 508c, and 508f) together.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All advantageous embodiments claimed in method claims may also apply to system/apparatus claims.

### List of References

100 an industrial environment
102 an engineering system
120A-N one or more client devices
104 a network
108A-N one or more engineering objects
120A-N one or more client devices
110 a platform
112 an automation module
114 a server
116 a network interface
118 a database
202 a processor(s)
204 an accessible memory
206 a storage unit
208 a communication interface
210 an input-output unit
212 a network interface
214 a bus
216 an integrated development environment (IDE)
302 a request handler module,
304 an object behavior model generation module,
306 an analysis module,
308 a modifier module
310 an engineering project database
312 a validation module
314 a deployment module.
504a and 504b two or more engineering projects
502 the group of engineering projects
506a-f first set of logical blocks
508a-f second set of logical blocks
602 a plurality of nodes
600 ontology schema
702 a first engineering project
704 a second engineering project

## Claims

1. A method of generating engineering projects compatible with a specific engineering environment,
wherein an engineering project comprises a plurality of engineering programs and is configured to control the operation of devices in a technical installation, wherein the engineering programs are configured to control operation of one or more of the devices of the technical installation, and
wherein an engineering environment is associated to a technical installation and comprises information about conventions and constraints which must be adhered to, by the plurality of engineering programs in the engineering project, the method comprising:
receiving, by a processing unit (202), a request to convert a first engineering project (702) which is compatible with a first engineering environment (702a), to a second engineering project (704) which is compatible with a second engineering environment (704a) wherein the first engineering environment (702a) is a single-user engineering environment and the second engineering environment (704a) is a multi-user engineering environment;
determining, by the processing unit (202), a plurality of logical blocks (506a-f, 508a-f) from a plurality of engineering projects (502), wherein each of the plurality of engineering projects (502) are compatible with a specific engineering environment of a plurality of engineering environments, wherein the plurality of logical blocks is determined by grouping a plurality of code statements into the plurality of logical blocks based on analysis of the data flow and the control flow between the plurality of code statements in the plurality of engineering projects (502);
generating, by the processing unit (202), an ontology schema (600) for the plurality of engineering projects (502), wherein the ontology schema (600) comprises:
a) information about relationships between the determined plurality of logical blocks (506a-f and 508a-f), and
b) information about data flow and control flow between each of the plurality of logical blocks (506a-f and 508a-f) of the plurality of engineering projects (502);
determining, by the processing unit (202), from the plurality of logical blocks (506a-f and 508a-f), a set of logical blocks which are compatible with the second engineering environment (704a) based on an analysis of the generated ontology schema (600), the first engineering project (702), information about a correspondence between logical blocks of the first engineering project and the second engineering project and information about a compatibility of the plurality of logical blocks with the plurality of engineering environments; and
generating, by the processing unit (202), the second engineering project (704) which is compatible with the second engineering environment (704a), by merging of the determined set of logical blocks based on the generated ontology schema.

2. The method according to claim 1, wherein the determination of the plurality of logical blocks (506a-f and 508a-f) comprises:
determining, by the processing unit (202), the plurality of code statements from the plurality of engineering projects (502) based on an analysis of the plurality of engineering projects (502);
determining, by the processing unit (202), a dataflow and a control flow between each of the determined plurality of code statements, based on an analysis of the plurality of code statements; and
determining, by the processing unit (202), the plurality of logical blocks (506a-f and 508a-f) from the plurality of engineering projects 502 by grouping the plurality of statements into the plurality of logical blocks (506a-f and 508a-f) based on analysis of the determined data flow and the determined control flow between each of the determined plurality of code statements.

3. The method according to claims 1 or 2, wherein the generation of the ontology schema comprises:
generating, by the processing unit (202), a knowledge graph for each of the determined plurality of logical blocks (506a-f and 508a-f), wherein the knowledge graph generated for a specific logical block comprises information about the data flow and the control flow between a set of statements within the specific logical block; and
generating, by the processing unit (202), the ontology schema (600) for the plurality of engineering projects (502) by merging a plurality of knowledge graphs generated for the plurality of logical block (506a-f and 508a-f) .

4. The method according to claims 1 to 3, further comprising:
receiving, by the processing unit (202), a request to integrate a code snippet into the generated second engineering project (704);
generating, by the processing unit (202), an ontological representation for the code snippet, based on an analysis of the code snippet;
determining, by the processing unit (202), a portion of the generated ontology schema (600), which is similar to the generated ontological representation of the code snippet; and
modifying, by the processing unit (202), the second engineering project (704) by integration of the code snippet into the second engineering project (704) based on an analysis of the determined portion of the ontology schema (600) such that the integrated code snippet is compatible with the second engineering environment.

5. The method according to claims 1 to 4, further comprising:
analyzing, by the processing unit (202), the generated ontology schema (600) and the second engineering project (704) to determine one or more errors in a first logical block of the determined set of logical blocks, wherein the one or more errors correspond to one or more portions of the first logical block that is causing incompatibility of the first logical block with the second engineering environment;
modifying, by the processing unit (202), the first logical block of the set of logical blocks to make the first logical block compatible with the second engineering environment, to eradicate the determined one or more errors in the first logical block of the set of logical blocks;
predicting, by the processing unit (202), an occurrence of a variation in one or more key performance indicators associated with the second engineering project (704) based on the analysis of the ontology schema (600), wherein the variation is predicted to occur as a result of the modification of the first logical block; and
modifying, by the processing unit (202), one or more programming blocks of the set of logical blocks, based on the analysis of the ontology schema (600), to prevent the occurrence of the variation in the one or more key performance indicators associated with the second engineering project (704).

6. The method according to claim 1 to 5, further comprising:
generating, by the processing unit (202), a simulation instance for a third engineering environment; and
simulating, by the processing unit (202), execution of the generated second engineering project (704) in the third engineering environment by executing the second engineering project (704) on the generated simulation instance.

7. The method according to claim 6, further comprising:
determining, by the processing unit (202), whether the generated second engineering project (704) is compatible with the third engineering environment, based on a result of the simulated execution of the generated second engineering project (704);
deploying, by the processing unit (202), the generated second engineering project (704) in real-time onto the third engineering environment, based on a determination that the generated second engineering project is compatible; and
displaying, by the processing unit (202), the generated second engineering project (704) on a display device (120a-n).

8. The method according to claim 6, further comprising:
notifying, by the processing unit (202), about an incompatibility of the generated second engineering project (704) with the third engineering environment, based on a determination that the generated second engineering project (704) is incompatible with the third engineering environment (704a) ;
generating, by the processing unit (202), a plurality of error log files associated with the generated second engineering project, based on the determination that the generated second engineering project is incompatible with the third engineering environment; and
displaying, by the processing unit (202), the generated plurality of error log files on a display device (120A-N).

9. The method according to claim 1, further comprising:
determining, by the processing unit (202), two or more logical blocks in the set of logical blocks, which correspond to different portions of a common subroutine; and
generating, by the processing unit (202), a combined logical block by merging the determined two or more logical blocks of the set of logical blocks.

10. The method according to claim 1, further comprising:
mapping, by the processing unit (202), the set of logical blocks to a plurality of subroutines in the second engineering project; and
grouping, by the processing unit (202), into a plurality of groups based on the mapping of the set of logical blocks to the plurality of subroutines, wherein each group of the plurality of groups contains one or more logical blocks, of the set of logical blocks, which are mapped to a specific subroutine of the plurality of subroutines.

11. An engineering system for generation of engineering projects which is compatible with a specific engineering environment, wherein the engineering system comprises:
one or more processing unit (202); and
a memory (204) coupled to the one or more processor(s), wherein the memory comprises an automation module stored in the form of machine-readable instructions executable by the one or more processor(s), wherein the automation module (112) is capable of performing a method according to any of the claims 1-10.

12. An industrial environment (100) comprising:
an engineering system (102) as claimed in claim 11;
a technical installation (106) comprising one or more physical components; and
one or more client devices (120A-N) communicatively coupled to the engineering system (102) via a network (104).

13. A computer-program product, having machine-readable instructions stored therein, that when executed by a processing unit (202), cause the processing unit (202) to perform a method according to any of the claims 1-10.

## Patentansprüche

1. Verfahren zum Erzeugen von Engineering-Projekten, die mit einer bestimmten Engineering-Umgebung kompatibel sind,
wobei ein Engineering-Projekt eine Vielzahl von Engineering-Programmen umfasst und dazu ausgelegt ist, den Betrieb von Vorrichtungen in einer technischen Installation zu steuern, wobei die Engineering-Programme dazu ausgebildet sind, den Betrieb von einer oder mehreren der Vorrichtungen der technischen Installation zu steuern, und
wobei eine Engineering-Umgebung mit einer technischen Installation assoziiert ist und Informationen über Konventionen und Einschränkungen umfasst, die durch die Vielzahl von Engineering-Programmen in dem Engineering-Projekt eingehalten werden müssen, wobei das Verfahren Folgendes umfasst:
Empfangen, durch eine Verarbeitungseinheit (202), einer Anforderung zum Umwandeln eines ersten Engineering-Projekts (702), das mit einer ersten Engineering-Umgebung (702a) kompatibel ist, in ein zweites Engineering-Projekt (704), das mit einer zweiten Engineering-Umgebung (704a) kompatibel ist, wobei die erste Engineering-Umgebung (702a) eine Einzelbenutzer-Engineering-Umgebung ist und die zweite Engineering-Umgebung (704a) eine Mehrbenutzer-Engineering-Umgebung ist;
Bestimmen, durch die Verarbeitungseinheit (202), einer Vielzahl von logischen Blöcken (506a-f, 508a-f) aus einer Vielzahl von Engineering-Projekten (502), wobei jedes der Vielzahl von Engineering-Projekten (502) mit einer spezifischen Engineering-Umgebung einer Vielzahl von Engineering-Umgebungen kompatibel ist, wobei die Vielzahl von logischen Blöcken durch Gruppieren einer Vielzahl von Codeanweisungen in die Vielzahl von logischen Blöcken basierend auf einer Analyse des Datenflusses und des Steuerflusses zwischen der Vielzahl von Codeanweisungen in der Vielzahl von Engineering-Projekten (502) bestimmt werden;
Erzeugen, durch die Verarbeitungseinheit (202), eines Ontologieschemas (600) für die Vielzahl von Engineering-Projekten (502), wobei das Ontologieschema (600) Folgendes umfasst:
a) Informationen über Beziehungen zwischen der bestimmten Vielzahl von logischen Blöcken (506a-f und 508a-f) und
b) Informationen über Datenfluss und Steuerfluss zwischen jedem der Vielzahl von logischen Blöcken (506a-f und 508a-f) der Vielzahl von Engineering-Projekten (502);
Bestimmen, durch die Verarbeitungseinheit (202), aus der Vielzahl von logischen Blöcken (506a-f und 508a-f), eines Satzes logischer Blöcke, die mit der zweiten Engineering-Umgebung (704a) kompatibel sind, basierend auf einer Analyse des erzeugten Ontologieschemas (600), des ersten Engineering-Projekts (702), Informationen über eine Entsprechung zwischen logischen Blöcken des ersten Engineering-Projekts und des zweiten Engineering-Projekts und Informationen über eine Kompatibilität der Vielzahl von logischen Blöcken; und
Erzeugen, durch die Verarbeitungseinheit (202), des zweiten Engineering-Projekts (704), das mit der zweiten Engineering-Umgebung (704a) kompatibel ist, durch Zusammenführen des bestimmten Satzes von logischen Blöcken basierend auf dem erzeugten Ontologieschema.

2. Verfahren nach Anspruch 1, wobei die Bestimmung der Vielzahl von logischen Blöcken (506a-f und 508a-f) Folgendes umfasst:
Bestimmen, durch die Verarbeitungseinheit (202), der Vielzahl von Codeanweisungen aus der Vielzahl von Engineering-Projekten (502) basierend auf einer Analyse der Vielzahl von Engineering-Projekten (502);
Bestimmen, durch die Verarbeitungseinheit (202), eines Datenflusses und eines Steuerflusses zwischen jeder der bestimmten Vielzahl von Codeanweisungen basierend auf einer Analyse der Vielzahl von Codeanweisungen; und
Bestimmen, durch die Verarbeitungseinheit (202), der Vielzahl von logischen Blöcken (506a-f und 508a-f) aus der Vielzahl von Engineering-Projekten 502 durch Gruppieren der Vielzahl von Anweisungen in die Vielzahl von logischen Blöcken (506a-f und 508a-f) basierend auf einer Analyse des bestimmten Datenflusses und des bestimmten Steuerflusses zwischen jeder der bestimmten Vielzahl von Codeanweisungen.

3. Verfahren nach Anspruch 1 oder 2, wobei das Erzeugen des Ontologieschemas Folgendes umfasst:
Erzeugen, durch die Verarbeitungseinheit (202), eines Knowledge-Graphen für jeden der bestimmten Vielzahl von logischen Blöcken (506a-f und 508a-f), wobei der für einen spezifischen logischen Block erzeugte Knowledge-Graph Informationen über den Datenfluss und den Steuerfluss zwischen einem Satz von Anweisungen innerhalb des spezifischen logischen Blocks umfasst; und
Erzeugen, durch die Verarbeitungseinheit (202), des Ontologieschemas (600) für die Vielzahl von Engineering-Projekten (502) durch Zusammenführen einer Vielzahl von Knowledge-Graphen, die für die Vielzahl von logischen Blöcken (506a-f und 508a-f) erzeugt werden.

4. Verfahren nach Anspruch 1 bis 3, das ferner Folgendes umfasst:
Empfangen, durch die Verarbeitungseinheit (202), einer Anforderung zum Integrieren eines Codefragments in das erzeugte zweite Engineering-Projekt (704);
Erzeugen, durch die Verarbeitungseinheit (202), einer ontologischen Repräsentation für das Codefragment basierend auf einer Analyse des Codefragments;
Bestimmen, durch die Verarbeitungseinheit (202), eines Teils des erzeugten Ontologieschemas (600), der der erzeugten ontologischen Repräsentation des Codefragments ähnlich ist; und
Modifizieren, durch die Verarbeitungseinheit (202), des zweiten Engineering-Projekts (704) durch Integration des Codefragments in das zweite Engineering-Projekt (704) basierend auf einer Analyse des bestimmten Teils des Ontologieschemas (600), sodass das integrierte Codefragment mit der zweiten Engineering-Umgebung kompatibel ist.

5. Verfahren nach Anspruch 1 bis 4, das ferner Folgendes umfasst:
Analysieren, durch die Verarbeitungseinheit (202), des erzeugten Ontologieschemas (600) und des zweiten Engineering-Projekts (704), um einen oder mehrere Fehler in einem ersten logischen Block des bestimmten Satzes von logischen Blöcken zu bestimmen, wobei der eine oder die mehreren Fehler einem oder mehreren Abschnitten des ersten logischen Blocks entsprechen, die eine Inkompatibilität des ersten logischen Blocks mit der zweiten Engineering-Umgebung verursachen;
Modifizieren, durch die Verarbeitungseinheit (202), des ersten logischen Blocks des Satzes logischer Blöcke, um den ersten logischen Block mit der zweiten Engineering-Umgebung kompatibel zu machen, um den bestimmten einen oder die bestimmten mehreren Fehler in dem ersten logischen Block des Satzes logischer Blöcke zu löschen;
Vorhersagen, durch die Verarbeitungseinheit (202), eines Auftretens einer Variation in einer oder mehreren Leistungskennzahlen, die mit dem zweiten Engineering-Projekt (704) assoziiert sind, basierend auf der Analyse des Ontologieschemas (600), wobei die Variation als Ergebnis der Modifikation des ersten logischen Blocks vorhergesagt wird; und
Modifizieren, durch die Verarbeitungseinheit (202), eines oder mehrerer Programmierblöcke des Satzes logischer Blöcke basierend auf der Analyse des Ontologieschemas (600), um das Auftreten der Variation in dem einen oder den mehreren Leistungskennzahlen, die mit dem zweiten Engineering-Projekt (704) assoziiert sind, zu verhindern.

6. Verfahren nach Anspruch 1 bis 5, das ferner Folgendes umfasst:
Erzeugen, durch die Verarbeitungseinheit (202), einer Simulationsinstanz für eine dritte Engineering-Umgebung; und
Simulieren, durch die Verarbeitungseinheit (202), der Ausführung des erzeugten zweiten Engineering-Projekts (704) in der dritten Engineering-Umgebung durch Ausführen des zweiten Engineering-Projekts (704) auf der erzeugten Simulationsinstanz.

7. Verfahren nach Anspruch 6, das ferner Folgendes umfasst:
Bestimmen, durch die Verarbeitungseinheit (202), ob das erzeugte zweite Engineering-Projekt (704) mit der dritten Engineering-Umgebung kompatibel ist, basierend auf einem Ergebnis der simulierten Ausführung des erzeugten zweiten Engineering-Projekts (704);
Einsetzen, durch die Verarbeitungseinheit (202), des erzeugten zweiten Engineering-Projekts (704) in Echtzeit auf die dritte Engineering-Umgebung basierend auf einer Bestimmung, dass das erzeugte zweite Engineering-Projekt kompatibel ist; und
Anzeigen, durch die Verarbeitungseinheit (202), des erzeugten zweiten Engineering-Projekts (704) auf einer Anzeigevorrichtung (120a-n).

8. Verfahren nach Anspruch 6, das ferner Folgendes umfasst:
Benachrichtigen, durch die Verarbeitungseinheit (202), über eine Inkompatibilität des erzeugten zweiten Engineering-Projekts (704) mit der dritten Engineering-Umgebung basierend auf einer Bestimmung, dass das erzeugte zweite Engineering-Projekt (704) mit der dritten Engineering-Umgebung (704a) inkompatibel ist;
Erzeugen, durch die Verarbeitungseinheit (202), einer Vielzahl von Fehlerprotokolldateien, die mit dem erzeugten zweiten Engineering-Projekt assoziiert sind, basierend auf der Bestimmung, dass das erzeugte zweite Engineering-Projekt mit der dritten Engineering-Umgebung inkompatibel ist; und
Anzeigen, durch die Verarbeitungseinheit (202), der erzeugten Vielzahl von Fehlerprotokolldateien auf einer Anzeigevorrichtung (120A-N).

9. Verfahren nach Anspruch 1, das ferner Folgendes umfasst:
Bestimmen, durch die Verarbeitungseinheit (202), von zwei oder mehr logischen Blöcken in dem Satz logischer Blöcke, die unterschiedlichen Teilen einer gemeinsamen Unterroutine entsprechen; und
Erzeugen, durch die Verarbeitungseinheit (202), eines kombinierten logischen Blocks durch Zusammenführen der bestimmten zwei oder mehr logischen Blöcke des Satzes logischer Blöcke.

10. Verfahren nach Anspruch 1, das ferner Folgendes umfasst:
Abbilden, durch die Verarbeitungseinheit (202), des Satzes von logischen Blöcken auf eine Vielzahl von Unterroutinen in dem zweiten Engineering-Projekt; und
Gruppieren, durch die Verarbeitungseinheit (202), in eine Vielzahl von Gruppen basierend auf der Abbildung des Satzes logischer Blöcke auf die Vielzahl von Unterroutinen, wobei jede Gruppe der Vielzahl von Gruppen einen oder mehrere logische Blöcke des Satzes logischer Blöcke enthält, die auf eine spezifische Unterroutine der Vielzahl von Unterroutinen abgebildet sind.

11. Engineering-System zur Erzeugung von Engineering-Projekten, das mit einer spezifischen Engineering-Umgebung kompatibel ist, wobei das Engineering-System Folgendes umfasst:
eine oder mehrere Verarbeitungseinheiten (202); und
einen Speicher (204), der an den einen oder die mehreren Prozessor(en) gekoppelt ist, wobei der Speicher ein Automationsmodul umfasst, das in Form maschinenlesbarer Anweisungen gespeichert ist, die durch den einen oder die mehreren Prozessor(en) ausführbar sind, wobei das Automationsmodul (112) in der Lage ist, ein Verfahren nach einem der Ansprüche 1-10 durchzuführen.

12. Industrielle Umgebung (100), die Folgendes umfasst:
ein Engineering-System (102) nach Anspruch 11;
eine technische Installation (106), die eine oder mehrere physische Komponenten umfasst; und
eine oder mehrere Client-Vorrichtungen (120A-N), die über ein Netzwerk (104) kommunikativ mit dem Engineering-System (102) gekoppelt sind.

13. Computerprogrammprodukt mit darin gespeicherten maschinenlesbaren Anweisungen, die, wenn sie durch eine Verarbeitungseinheit (202) ausgeführt werden, die Verarbeitungseinheit (202) veranlassen, ein Verfahren gemäß einem der Ansprüche 1-10 durchzuführen.

## Revendications

1. Procédé de génération de projets d'ingénierie compatibles avec un environnement d'ingénierie spécifique,
dans lequel un projet d'ingénierie comprend une pluralité de programmes d'ingénierie et est configuré pour contrôler le fonctionnement de dispositifs dans une installation technique, les programmes d'ingénierie étant configurés pour contrôler le fonctionnement d'un ou plusieurs des dispositifs de l'installation technique, et
dans lequel un environnement d'ingénierie est associé à une installation technique et comprend des informations sur les conventions et les contraintes qui doivent être respectées par la pluralité de programmes d'ingénierie dans le projet d'ingénierie, le procédé comprenant les étapes suivantes :
recevoir, par une unité de traitement (202), une demande de conversion d'un premier projet d'ingénierie (702) qui est compatible avec un premier environnement d'ingénierie (702a), en un deuxième projet d'ingénierie (704) qui est compatible avec un deuxième environnement d'ingénierie (704a) où le premier environnement d'ingénierie (702a) est un environnement d'ingénierie mono-utilisateur et le deuxième environnement d'ingénierie (704a) est un environnement d'ingénierie multi-utilisateur ;
déterminer, par l'unité de traitement (202), une pluralité de blocs logiques (506a-f, 508a-f) à partir d'une pluralité de projets d'ingénierie (502), où chacun de la pluralité de projets d'ingénierie (502) est compatible avec un environnement d'ingénierie spécifique d'une pluralité d'environnements d'ingénierie, où la pluralité de blocs logiques est déterminée en regroupant une pluralité d'instructions de code dans la pluralité de blocs logiques sur la base de l'analyse du flux de données et du flux de contrôle entre la pluralité d'instructions de code dans la pluralité de projets d'ingénierie (502) ;
générer, par l'unité de traitement (202), un schéma d'ontologie (600) pour la pluralité de projets d'ingénierie (502), le schéma d'ontologie (600) comprenant :
a) des informations sur les relations entre la pluralité déterminée de blocs logiques (506a-f et 508a-f), et
b) des informations sur le flux de données et le flux de contrôle entre chacun de la pluralité de blocs logiques (506a-f et 508a-f) de la pluralité de projets d'ingénierie (502) ;
déterminer, par l'unité de traitement (202), à partir de la pluralité de blocs logiques (506a-f et 508a-f), un ensemble de blocs logiques qui sont compatibles avec le deuxième environnement d'ingénierie (704a) sur la base d'une analyse du schéma d'ontologie généré (600), du premier projet d'ingénierie (702), des informations sur une correspondance entre des blocs logiques du premier projet d'ingénierie et du deuxième projet d'ingénierie et des informations sur une compatibilité de la pluralité de blocs logiques avec la pluralité d'environnements d'ingénierie ; et
générer, par l'unité de traitement (202), le deuxième projet d'ingénierie (704) qui est compatible avec le deuxième environnement d'ingénierie (704a), par fusion de l'ensemble déterminé de blocs logiques sur la base du schéma d'ontologie généré.

2. Procédé selon la revendication 1, dans lequel la détermination de la pluralité de blocs logiques (506a-f et 508a-f) comprend les étapes suivantes :
déterminer, par l'unité de traitement (202), la pluralité d'instructions de code à partir de la pluralité de projets d'ingénierie (502) sur la base d'une analyse de la pluralité de projets d'ingénierie (502) ;
déterminer, par l'unité de traitement (202), un flux de données et un flux de contrôle entre chacune de la pluralité déterminée d'instructions de code, sur la base d'une analyse de la pluralité d'instructions de code ; et
déterminer, par l'unité de traitement (202), la pluralité de blocs logiques (506a-f et 508a-f) à partir de la pluralité de projets d'ingénierie 502 en regroupant la pluralité d'instructions dans la pluralité de blocs logiques (506a-f et 508a-f) sur la base de l'analyse du flux de données déterminé et du flux de contrôle déterminé entre chacune de la pluralité déterminée d'instructions de code.

3. Procédé selon la revendication 1 ou la revendication 2, dans lequel la génération du schéma d'ontologie comprend les étapes suivantes :
générer, par l'unité de traitement (202), un graphe de connaissances pour chacun de la pluralité déterminée de blocs logiques (506a-f et 508a-f), où le graphe de connaissances généré pour un bloc logique spécifique comprend des informations sur le flux de données et le flux de contrôle entre un ensemble d'instructions au sein du bloc logique spécifique ; et
générer, par l'unité de traitement (202), le schéma d'ontologie (600) pour la pluralité de projets d'ingénierie (502) en fusionnant une pluralité de graphes de connaissances générés pour la pluralité de blocs logiques (506a-f et 508a-f).

4. Procédé selon les revendications 1 à 3, comprenant en outre les étapes suivantes :
recevoir, par l'unité de traitement (202), une demande d'intégration d'un extrait de code dans le deuxième projet d'ingénierie généré (704) ;
générer, par l'unité de traitement (202), une représentation ontologique pour l'extrait de code, sur la base d'une analyse de l'extrait de code ;
déterminer, par l'unité de traitement (202), une partie du schéma d'ontologie généré (600), qui est similaire à la représentation ontologique générée de l'extrait de code ; et
modifier, par l'unité de traitement (202), le deuxième projet d'ingénierie (704) par intégration de l'extrait de code dans le deuxième projet d'ingénierie (704) sur la base d'une analyse de la partie déterminée du schéma d'ontologie (600) de telle sorte que l'extrait de code intégré soit compatible avec le deuxième environnement d'ingénierie.

5. Procédé selon les revendications 1 à 4, comprenant en outre les étapes suivantes :
analyser, par l'unité de traitement (202), le schéma d'ontologie généré (600) et le deuxième projet d'ingénierie (704) pour déterminer une ou plusieurs erreurs dans un premier bloc logique de l'ensemble déterminé de blocs logiques, où les une ou plusieurs erreurs correspondent à une ou plusieurs parties du premier bloc logique qui provoque l'incompatibilité du premier bloc logique avec le deuxième environnement d'ingénierie ;
modifier, par l'unité de traitement (202), le premier bloc logique de l'ensemble de blocs logiques pour rendre le premier bloc logique compatible avec le deuxième environnement d'ingénierie, afin d'éradiquer les une ou plusieurs erreurs déterminées dans le premier bloc logique de l'ensemble de blocs logiques ;
prédire, par l'unité de traitement (202), l'apparition d'une variation dans un ou plusieurs indicateurs de performance clés associés au deuxième projet d'ingénierie (704) sur la base de l'analyse du schéma d'ontologie (600), la variation étant prédite comme résultant de la modification du premier bloc logique ; et
modifier, par l'unité de traitement (202), un ou plusieurs blocs de programmation de l'ensemble de blocs logiques, sur la base de l'analyse du schéma d'ontologie (600), pour empêcher l'apparition de la variation dans les un ou plusieurs indicateurs de performance clés associés au deuxième projet d'ingénierie (704).

6. Procédé selon les revendications 1 à 5, comprenant en outre les étapes suivantes :
générer, par l'unité de traitement (202), une instance de simulation pour un troisième environnement d'ingénierie ; et
simuler, par l'unité de traitement (202), l'exécution du deuxième projet d'ingénierie généré (704) dans le troisième environnement d'ingénierie en exécutant le deuxième projet d'ingénierie (704) sur l'instance de simulation générée.

7. Procédé selon la revendication 6, comprenant en outre les étapes suivantes :
déterminer, par l'unité de traitement (202), si le deuxième projet d'ingénierie généré (704) est compatible avec le troisième environnement d'ingénierie, sur la base d'un résultat de l'exécution simulée du deuxième projet d'ingénierie généré (704) ;
déployer, par l'unité de traitement (202), le deuxième projet d'ingénierie généré (704) en temps réel sur le troisième environnement d'ingénierie, sur la base d'une détermination de la compatibilité du deuxième projet d'ingénierie généré ; et
afficher, par l'unité de traitement (202), le deuxième projet d'ingénierie généré (704) sur un dispositif d'affichage (120an).

8. Procédé selon la revendication 6, comprenant en outre les étapes suivantes :
notifier, par l'unité de traitement (202), une incompatibilité du deuxième projet d'ingénierie généré (704) avec le troisième environnement d'ingénierie, sur la base d'une détermination selon laquelle le deuxième projet d'ingénierie généré (704) est incompatible avec le troisième environnement d'ingénierie (704a) ;
générer, par l'unité de traitement (202), une pluralité de fichiers journaux d'erreurs associés au deuxième projet d'ingénierie généré, sur la base de la détermination que le deuxième projet d'ingénierie généré est incompatible avec le troisième environnement d'ingénierie ; et
afficher, par l'unité de traitement (202), la pluralité générée de fichiers journaux d'erreurs sur un dispositif d'affichage (120A-N).

9. Procédé selon la revendication 1, comprenant en outre les étapes suivantes :
déterminer, par l'unité de traitement (202), deux blocs logiques, ou plus, dans l'ensemble de blocs logiques, qui correspondent à différentes parties d'une sous-routine commune ; et
générer, par l'unité de traitement (202), un bloc logique combiné en fusionnant les deux blocs logiques, ou plus, déterminés de l'ensemble de blocs logiques.

10. Procédé selon la revendication 1, comprenant en outre les étapes suivantes :
mapper, par l'unité de traitement (202), l'ensemble de blocs logiques sur une pluralité de sous-routines dans le deuxième projet d'ingénierie ; et
effectuer un regroupement, par l'unité de traitement (202), en une pluralité de groupes basés sur le mappage de l'ensemble de blocs logiques sur la pluralité de sous-routines, où chaque groupe de la pluralité de groupes contient un ou plusieurs blocs logiques, de l'ensemble de blocs logiques, qui sont mappés sur une sous-routine spécifique de la pluralité de sous-routines.

11. Système d'ingénierie pour la génération de projets d'ingénierie qui est compatible avec un environnement d'ingénierie spécifique, le système d'ingénierie comprenant :
une ou plusieurs unités de traitement (202) ; et
une mémoire (204) couplée auxdits un ou plusieurs processeurs, la mémoire comprenant un module d'automatisation stocké sous la forme d'instructions lisibles par une machine exécutables par les un ou plusieurs processeurs, le module d'automatisation (112) étant capable d'exécuter un procédé selon l'une quelconque des revendications 1 à 10.

12. Environnement industriel (100) comprenant :
un système d'ingénierie (102) selon la revendication 11 ;
une installation technique (106) comprenant un ou plusieurs composants physiques ; et
un ou plusieurs dispositifs clients (120A-N) couplés de manière communicative au système d'ingénierie (102) par l'intermédiaire d'un réseau (104).

13. Produit programme informatique dans lequel sont stockées des instructions lisibles par machine, qui, lorsqu'elles sont exécutées par une unité de traitement (202), amènent l'unité de traitement (202) à réaliser un procédé selon l'une quelconque des revendications 1 à 10.
